# EUROPEAN PATENT SPECIFICATION

(11) **EP 0 696 947 B1**
(45) Date of publication and mention of the grant of the patent: **05.03.1997**
(21) Application number: 92913441.9
(22) Date of filing: 16.06.1992
(51) Int. Cl.: B25H 3/00, F16B 7/08, F16L 3/10

(54) **CLAMP ATTACHMENT**
KLEMMENBEFESTIGUNG
FIXATION DE SERRAGE

(30) Priority: 24.06.1991 SE 9101931
(43) Date of publication of application: 21.02.1996
(73) Proprietor: FORSBERG, Bengt, S-330 12 Forsheda (SE)
(72) Inventor: FORSBERG, Bengt, S-330 12 Forsheda (SE)
(74) Representative: Mossmark, Anders
(86) International application number: SE9200427
(87) International publication number: WO9300202

(56) References cited:
- US-A- 1 262 163
- US-A- 3 088 702
- US-A- 4 061 299
- US-A- 4 669 688

## Description

The present invention concerns a holder arrangement as defined in the pre-characterising portion of claim 1 for supporting and clamping of objects such as for example tools, implements, tubes or rods. The pre-characterising portion of claim 1 is based on the disclosure of the document US-A-4 061 299. The clamp can either be used by itself, for instance for attaching a sign, provided with a bar, against a wall, plate or the like, or can be used in cooperation with an additional clamp part to fix for example cleaning implements to the tubes which are commonly found on cleaning trolleys, or further as implement clamps in cleaning cupboards.

### Background of the invention

The applicant's own Swedish patent SE-C-439 270 describes a grip member, for example of rubber material, for clamping of tools, implements etc. By being supported on two rods positioned at a distance from each other, said grip member can assume a first ready position and a second grip position which is taken up when, for instance, an implement is pressed against the grip member in the ready position, whereby the grip member "swings in" around the implement through excentric action. In this way a very firm grip around the implement is obtained at the same time as the grip member, due to its rubber-like characteristics, adapts itself to the shape of the implement within certain limits. When the implement should be released from the holder again, the implement is simply pulled out again, whereupon the grip member "swings out" and frees the implement through said excenter action. Due to its simple and shape-adaptable structure, this grip member has achieved great success on the market as a holder for cleaning, workshop and hobby uses. The grip member has previously been adjoined to various underlayers with the help of an adjoining member formed from bent metal wire as well as an attachment plate of metal. Said attachment plate is attached thereby to the underlayer with the help of screws, rivets or other attachments elements.

### Technical problem

In order to mount said holder arrangement, i.e. the grip member and the adjoining member, it is often necessary to mount the holder on one of the vertical, horizontal or inclined metal tubes which generally form the frame of such a cleaning trolley. These tubes are normally in the form of aluminium tubes with a dimension of 16-25 mm. The above described holder can thus, because of its construction, only be fastened to the tube either by the use of screws which often adversely affect the tube's strength due to the screw hole, or through welding which is complicated and expensive since the tubes are normally made of aluminium. Apart from these obvious disadvantages such a mounting can hardly be seen as aesthetically pleasing to the eye. Furthermore, due to the ever increasing ingenuity of the arrangement of the tube structures on cleaning trollies and the increased number of implements having different appearance, it is particularly desirable that the holding arrangements or the implements etc., which are mounted on the cleaning trolley's tubes, are rotatably arranged so that the implements can be fastened in suitable positions with respect to the cleaning trolley's structure and anatomy. In this connection it is desirable that also the holder, after suitable rotation, can be secured in a fixed position with respect to the tube. These desirable characteristics however are lacking completely on the above described holder according to the known state of the art.

Another known solution is a holder member or "clasp" member, of conventional type consisting of two halves provided to encircle the cleaning trolley's tubes and to be fixed with the help of two screw couplings - one on each side of the tube, i.e. in each end of said halves. Such a clasp member has earlier been adapted for holding an implement holding part in that each clasp half is equipped with clamping members with a U-formed cross-section, which members grip around the holding part's connection portion which is formed from a circular disc. This arrangement is fixed consequently around the tube in that the clasp halves are applied on either side of the tube, whereby they are preliminarily screwed together at each end at the same time as the holder member grips around the circular adjoining disc. In this opening "adjustment position" the holding part, with its circular adjoining disc, can consequently turn to a suitably chosen position, whereafter both the screws are screwed up, whereby the holder member fixedly grips around the adjoining disc and thereby locks the holder part in the chosen position. The disadvantage with such a solution is that the position adjustment has to occur with two screws, which means that an immediate locking in the desired position is difficult to achieve. Another important disadvantage is that the screw coupling, which must necessarily be positioned between the tube and the holding part's connection disc, implies an undesirable increase of the distance between the grip member and the tube. Since, for example, cleaning trollies i.a. are constructed with a thought to the ease of practical use even in narrow passages and the like, it is naturally desirable to minimize this distance.

### Object of the invention

The object of the invention is to overcome the above described problems by providing a holder arrangement for supporting and clamping of objects which, in a simple manner, allows mounting of a holder on for example a tube of an associated cleaning trolley, in such a way that the distance between the tube and the above mentioned grip member is minimized, and so that the connection portion, to which the grip member is attached, can be rotated to the desired position during mounting in order to finally be fixed in this position.

Additionally an object of the invention is to provide a holder arrangement which, apart from possessing the above mentioned characteristics, is able to serve by itself as an independent holder for a tube, for instance belonging to a sign, where the holder in a simple manner is attached to an underlayer like for example a plate or similar, in such a way that the holder and thereby the tube can be turned during mounting to the desired position with respect to the underlayer.

### Summary of the invention

The above mentioned objects are achieved by providing a holder arrangement for supporting and clamping an object according to the following claims.

### Brief description of the figures

The invention will now be described with the help of an embodiment and with reference to the accompanying drawings, in which:
- Fig. 1: is a perspective view of an embodiment of the invention in the fixing position;
- Fig. 2: is a perspective view of the holder which is shown in Fig. 1, the holder being shown in an open, reception position;
- Fig. 3: is a perspective view of a holder according to the invention, which is shown mounted around the tube and which supports a connection part with gripping member according to the applicant's Swedish patent SE-C-439 270;
- Fig. 4: is a section view which shows the holder according to the invention from above, being adjoined to a tube, as well as a connection part adapted thereto (shown without grip member);
- Fig. 5: is a section view from above of the arrangement in Fig. 4, but which here is shown in a mounted position around the tube;
- Fig. 6: is a front view of the holder according to the invention, in which it is clearly shown how the connection portion can be turned with respect to the holder;
- Fig. 7: is a plan view of the holder according to the invention;
- Fig. 8: is a front view of the holder which is shown in Fig. 7;'
- Fig. 9: is a section view in plan of an alternative embodiment of the holder according to the invention, intended for securing a tube or the like to, for example, a plate;
- Fig. 10: is a section view, in plan, of a further embodiment of the invention.

### Description of the embodiments

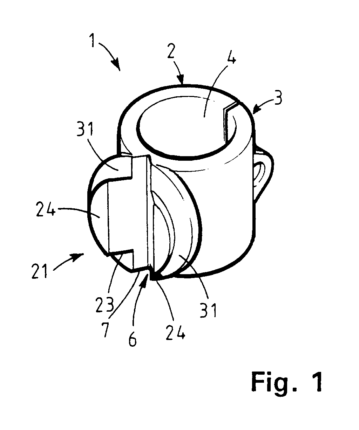

In Fig. 1 reference numeral 1 denotes a holder constructed of two halves 2, 3, defining internally a cylindrical passage 4. The cylindrical passage 4 is intended to encircle an elongate object, for example a tube belonging to the frame of a cleaning trolley or alternatively a rod or similar. Both the halves 2, 3 are pivotally attached to each other at one end by means of a joint 6 the centre line of which is parallel with the central axis of the internal cylindrical passage 4. In the shown example the joint 6 is made from a flexible joint portion 7. In this respect the holder 1 is manufactured in its entirety from a suitable plastics material which allows the joint portion 7 to be constructed in one piece with both the halves 2,3 and the desired flexibility or bendability is obtained due to the fact that the same joint portion 7 presents a small material thickness in comparison to the rest of the holder 1.

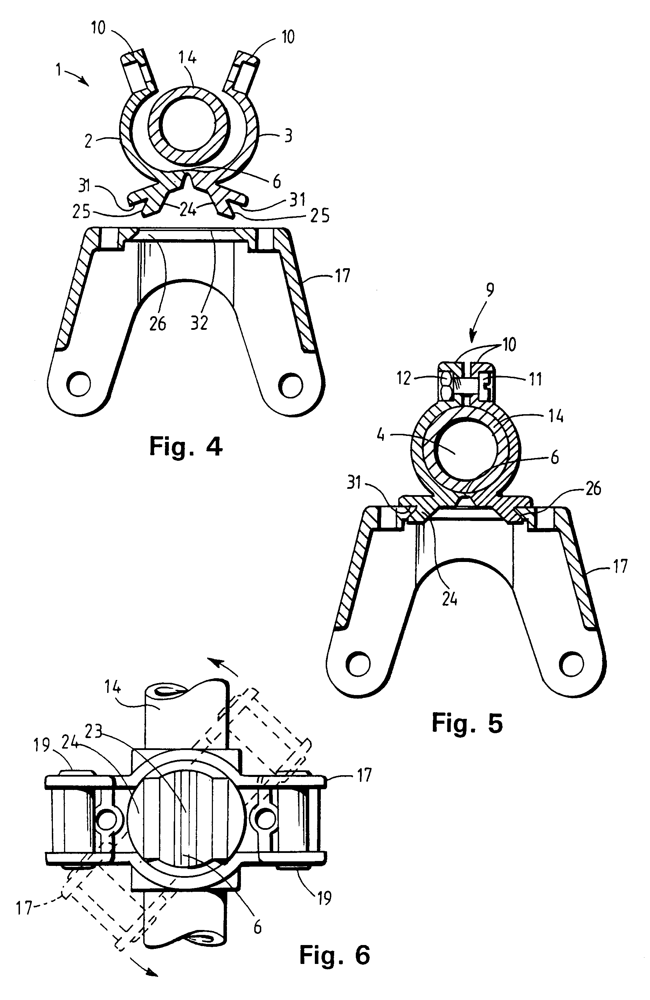

The opposed ends of the halves 2, 3 are provided with locking means 9 in the form of a screw coupling provided in cast lobes 10. The cast lobes 10 can, for example as shown in Fig. 5, be adapted via countersinking to cooperate with a screw 11 and corresponding nut 12. The screw 11 can also be of the self-tapping type, whereby the need for a nut 12 disappears and only one of the cast lobes 10 needs to be countersunk.

With the help of the joint 6 the holder 1 can be adjoined to a tube or a rod in that both the halves 2, 3 are swung out and thereby assume an open reception position. The holder 1 is thus adjoined to the rod, in the same way as a clamp of conventional type and is locked in a closed, fixing position with the help of the screw coupling.

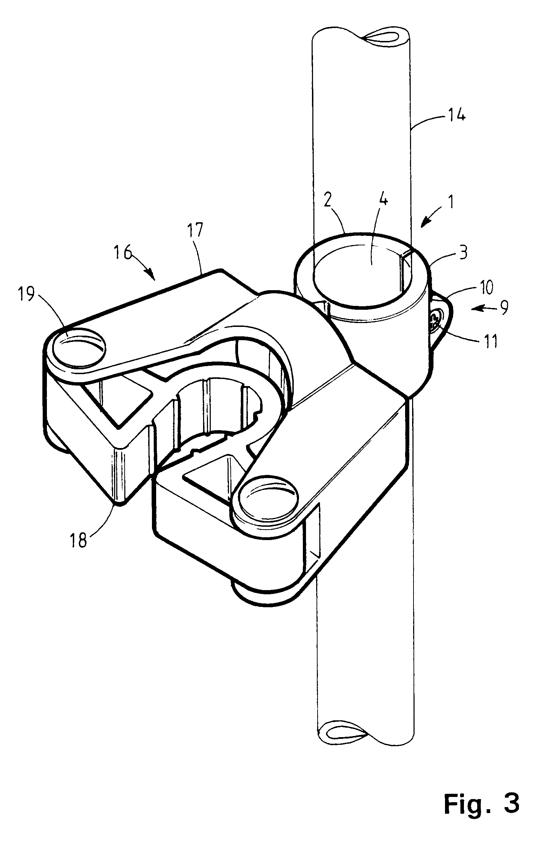

Fig. 3 shows the holder 1 in its closed fixing position around a tube 14. Attached to the holder is a further holding member 16. In accordance with the applicant's Swedish patent SE-C-439 270 this holding member 16 is made up of a connection part 17 provided with grip members 18 which are joined with the connection part 17 with the help of two pins 19. The grip member 18 is shown in the figures in its gripping position, however without the object in the form of an implement, tool etc. which is normally clamped by the grip member.

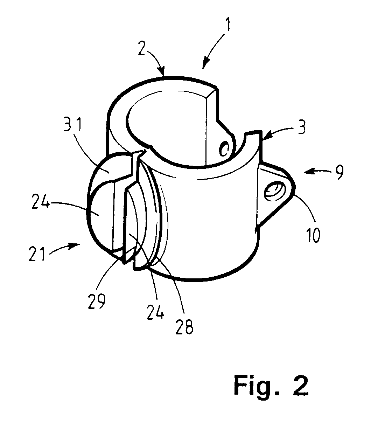

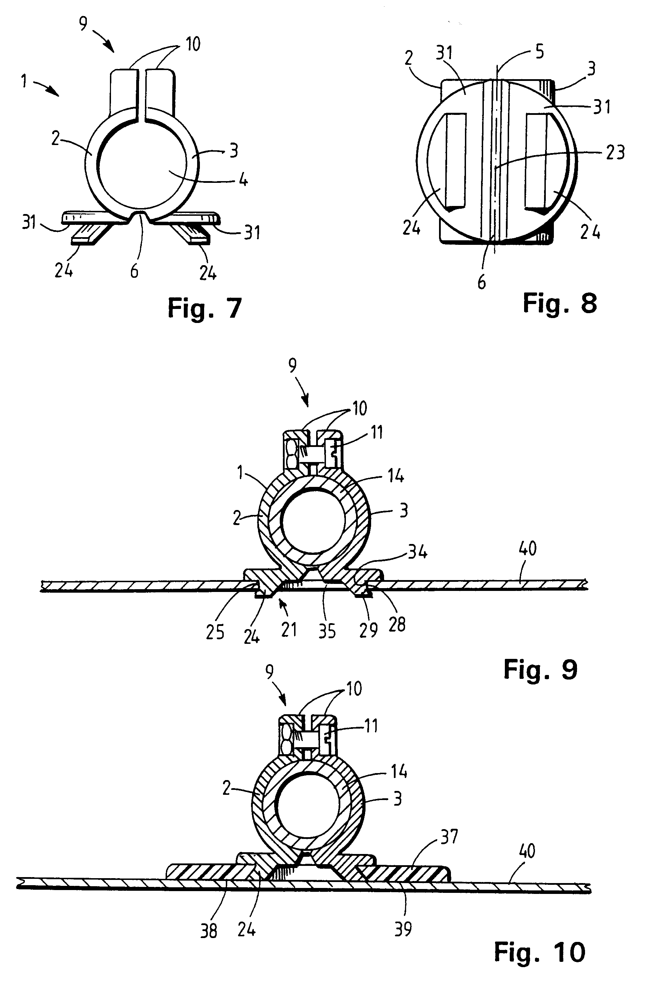

The connection of the holder 1 to the connection portion 17 will now be described in detail with reference to Fig. 1-8. For this connection, the halves 2, 3, on each side of the joint 6, are provided with engaging means which are generally denoted in the figures as 21. The engagement means 21 in the shown example are radially arranged around a rotation centre 23 positioned centrally along the joint's 6 centreline 5 as is best seen in Fig. 6 and 8. The engagement means 21 further comprise grip shoulders 24 which are provided with engagement surfaces 25 directed radially outwards with respect to the rotation centre 23. As is particularly clear from Fig. 4 and 5, the engagement surfaces 25 are adapted for engagement with corresponding engagement surfaces 26 in the connection portion 17. In the embodiment shown in Fig. 9 the engagement surfaces 25 are formed by a waist portion 28 in the form of a circular, cylindrical outer segment which is finished by a flange portion 29 which extends radially outwardly. In Fig. 4 to 8 there is shown another embodiment where the engagement surfaces 25 are instead formed by a substantially conical outer segment. In the latter case, i.e. with conical engagement surfaces 25, a very good engagement is obtained with the corresponding engagement surface 26 of the connection part 17. The engagement surface 26 of the connection part 17 can advantageously be formed as a substantially circular hole which, in the most suitable manner, has a specific form adapted to the shape of the engagement surfaces 25 of the grip shoulders 24.

The engage members 21 further present contact surfaces 31 which are substantially orientated at right angles to the plane of separation of both the halves 2, 3. These contact surfaces 31 form stable supports against the connection part 17 when the holder 1 and the connection part 17 are combined in the way shown in Fig. 5.

Fig. 4 shows in section view how the holder 1, in its open reception position, is attached to the tube 14 at the same time as the connection part 17 is held in the neighbourhood of the holder 1 in order that it can be introduced over the grip shoulders 24 of the holder 1 for engagement with the shoulders' engagement surfaces 25. In this way the halves 2, 3 are opened to such a degree that the outermost edges, viewed radially, of the grip shoulders 24 are free of the circular opening 32 which is presented by the smallest opening diameter of the connection part 17. In Fig. 5 the halves 2, 3 completely enclose the tube 14, and the engagement surfaces 25 of the grip shoulders 24 are now in engagement with corresponding engagement surfaces 26 of the connection part 17. Furthermore the screw 11 has been introduced in one cast lobe 10 for cooperation with a nut in the opposite cast lobe 10. As noted previously said cooperation can even occur when the screw 11 is of the self-tapping type, whereby countersinking in the one cast lobe 10 is not necessary. Before the screw 11 is fully tightened the holder 1 is in an adjustment position, in which the connection part 17 can be rotated to the desired position around said rotation centre 23. This is shown particularly clearly in Fig. 6, which is a view from straight ahead of the holder 1 with connection part 17 shown in said adjustment position, whereby the connection part 17 is also shown, in dashed lines, in a rotated position with respect to the holder 1. By manipulation of the screw 11 the grip shoulders 24 are hereby gradually brought into engagement with the engagement surfaces 26 of the connection part 17 by leverage action around the joint 6. Through this leverage action the engagement surfaces 25 of the grip shoulders 24 are thus tensioned harder and harder against the corresponding engagement surfaces 26 of the connection part 17 as the screw 11 is screwed tighter, in order finally to achieve a completely fixed position where the connection part 17 can no longer be rotated with respect to the holder 1 and the holder 1 itself is fixedly clamped to the tube 14. To summarize, the holder 1 can thus assume a first open reception position, a second adjustment position as well as a third closed fixing position around the tube 14.

The holder 1 according to the invention can however also be used as an independent holder for a tube or rod, for instance carrying a sign or the like, for attachment to an underlayer 40, for example a wall in the form of a plate 40 or other sheetlike member. This additional way of using the holder 1 is illustrated by two embodiments in Fig. 9 and 10, where the holder 1 supports a tube 14 as well as being secured to an elongated plane plate 40. In Fig. 9 the holder 1 is fixed to the plate 40 by means of the engagement of the engagement means 21 with the edgesurfaces 34 belonging to a circular aperture 35. The engagement surfaces 25 of the grip shoulders 24 are formed here in accordance with the earlier described type which was made from a waist portion 28 and a finishing flange portion 29. With this embodiment of the invention there is obtained a particularly simple and practical way to fasten for example sign posts to plane underlayers 40, whereby the only machining that is required is the cutting of a simple circular hole in the underlayer 40 which can be carried out quickly by the use of a drill at the site where it is intended to attach the sign post or tube 14. In this application, the holder 1 can be rotated together with the clamped tube 14, in a plane parallel with the underlayer, to the desired position by manipulation of the screw 11, which occurs in the same way as with the rotation of the connection part 17 described above in Fig. 6.

Fig. 10 shows a closely related embodiment of the invention, where use is made of an intermediate sheet for securing the holder 1 with a view to avoiding making a hole in the underlayer 40. In the shown example the intermediate sheet 37 is glued to the underlayer 40 with the help of a strong adhesive layer 39. This application is particularly suited for securing of posts, tubes etc. on underlayers 40 which for example form boundary walls for fluid containers or the like. The holder 1 is equipped here with engagement means 21 of conical type such as that described previously. From the figures it is clear that the great advantage offered by the holder 1 is that the grip shoulders 24 do not extend beyond the rear side of the intermediate sheet 37. It can immediately be seen that this characteristic can be used to great advantage in a whole range of various imaginable securing situations.

Another decisive advantage with the holder 1 according to the invention is that the clamping of the rod or tube 14 as well as said rotation are controlled at the same time by a solitary locking means 9 which is an important improvement compared to the previously known state of the art. Further, due to the fact that the locking means 9 is positioned on the opposite side of the tube 14 with respect to the engagement member 21, the distance between the engagement members' 21 furthest projecting portion and the tube 14 is minimized, which means that the holder according to the invention is particularly space-saving and compact in its construction.

The holder 1 has lastly emphasized its unique versatility as a result of these two manners of use, namely as a holder for mounting of, for example, an additional holding means 16 for a rod or a tube 14, as well as an independent holder for securing of tubes or rods 14 to a substantially planar underlayer. Said dual characteristics are not found in any of the other holders which are marketed.

The invention is not limited to the embodiments described above and shown in the drawings, but can of course be varied within the scope of the following claims. For example, the holder 1 can be formed substantially rectangularly. Furthermore instead of being a screw 11, the locking means 9 can be formed as a snap-coupling made from plastics material which offers gradual engagement. The joint 6 can of course be found in any other suitable manner in order to obtain a similar hinge action.

## Claims

1. Holder arrangement (1) for supporting and clamping objects, such as tools, implements or tubes, comprising two halves (2, 3) provided with locking means (9) intended to partly or wholly enclose an elongated object, whereby said halves (2, 3) are pivotally connected to each other by means of a joint (6), as well as being provided with engagement members (21) positioned on each side of said joint (6), characterized in that said engagement members (21) are radially arranged around a rotation centre (23) positioned along the centreline (5) of said joint (6), for engagement with a connection portion (17) adapted thereto, in turn presenting grip members (18) for clamping another elongated object, or for engagement with a mounting (40), whereby the holder (1) can take up an open reception position and a closed fixing position, and whereby said holder (1) can also take up an intermediate adjustment position, where said engagement members (21) by manipulation of said locking means (9), are so arranged, by leverage about the joint (6), to gradually be brought into engagement with said connection portion (17) or mounting (40) whereby, in the adjustment position, the holder (1) can turn relative to the mounting (40), or the connection portion (17) can turn relative to the holder (1) around said rotation centre (23).

2. Arrangement according to claim 1, **characterized** in that the clamping of said elongated object as well as said relative rotation are simultaneuously controlled by said locking means (9).

3. Arrangement according to claims 1 or 2, **characterized** in that the holder (1) only presents one locking means (9).

4. Arrangement according to the preceding claims, **characterized** in that when the holder (1) wholly or partly encloses said elongated object, the locking means (9) is positioned on the opposite side of the elongated object with respect to the engagement members (21).

5. Arrangement according to claim 1, wherein said engagement members (21) comprise grip shoulders (24) provided with engagement surfaces (25), directed radially outwardly with respect to said rotation centre (23), **characterized** in that said engagement surfaces (25) are formed by substantially conical surface segment.

6. Arrangement according to claim 1, **characterized** in that said locking means (9) is formed by a screw coupling.

## Patentansprüche

1. Halteranordnung (1) zum Lagern und Einklemmen von Gegenständen, wie z.B. Werkzeugen, Gerätschaften oder Röhren, mit zwei Hälten (2, 3), welche mit einer Arretierungseinrichtung (9) versehen ist, die zum teilweisen, oder vollständigen Umschließen eines länglichen Gegenstandes dient, wobei die Hälften (2, 3) verschwenkbar miteinander mittels eines Gelenks (6) verbunden sind, und mit Eingriffselementen (21) versehen ist, die auf jeder Seite des Gelenks (6) angeordnet sind,
dadurch gekennzeichnet,
daß die Eingriffselemente (21) radial um ein Drehzentrum (23) herum, das entlang der Mittellinie (5) des Gelenks (6) positioniert ist, angeordnet sind, zum Eingriff in einen daran angepaßten Verbindungsabschnitt (17), welcher wiederum Greifelemente (18) zum Einklemmen eines weiteren länglichen Gegenstandes oder zum Eingriff in einen Aufbau (40) aufweist, wobei die Halteranordnung (1) eine offene Aufnahmeposition und eine geschlossene Befestigungsposition einnehmen kann und wobei die Halteranordnung (1) ebenfalls eine mittlere Einstellposition annehmen kann, in der die Eingriffselemente (21) durch Verstellen der Arretierungseinrichtung (9) durch Hebelwirkung um das Gelenk (6) so angeordnet werden können, daß sie schrittweise in Eingriff mit dem Verbindungsabschnitt (17) oder dem Aufbau (40) bringbar sind, wobei die Halteranordnung (1) in der Einstellposition sich relativ zum Aufbau (40) um das Drehzentrum (23) drehen kann oder der Verbindungsabschnitt (17) sich relativ zur Halteranordnung (1) um das Drehzentrum (23) drehen kann.

2. Anordnung nach Anspruch 1,
dadurch gekennzeichnet,
daß das Einklemmen des länglichen Gegenstandes sowie die Relativdrehung gleichzeitig durch die Arretierungseinrichtung (9) steuerbar sind.

3. Anordnung nach Anspruch 1 oder 2,
dadurch gekennzeichnet,
daß die Halteranordnung (1) nur eine Arretierungseinrichtung (9) aufweist.

4. Anordnung nach mindestens einem der vorhergehenden Ansprüche,
dadurch gekennzeichnet,
daß, wenn die Halteranordnung (1) den länglichen Gegenstand vollständig oder teilweise umschließt, die Arretierungseinrichtung (9) auf der gegenüberliegenden Seite des länglichen Gegenstandes bezüglich der Eingriffselemente (21) angeordnet ist.

5. Anordnung nach Anspruch 1,
dadurch gekennzeichnet,
daß die Eingriffselemente (21) Greifschultern (24) aufweisen, die mit Eingriffsoberflächen (25) versehen sind, welche radial nach außen bezüglich des Drehzentrums (23) gerichtet sind, und daß die Eingriffsoberflächen (25) durch ein im wesentlichen konisches Oberflächensegment gebildet sind.

6. Anordnung nach Anspruch 1,
dadurch gekennzeichnet, daß
die Arretierungseinrichtung (9) durch eine Schraubverbindung gebildet ist.

## Revendications

1. Ensemble de retenue (1) destiné à supporter et serrer des objets, tels que des outils, des accessoires ou des tubes, comprenant deux moitiés (2, 3) munies d'un dispositif de blocage (9) et destinés à entourer partiellement ou totalement un objet allongé, les moitiés (2, 3) étant raccordées de manière pivotante l'une à l'autre par un joint (6) et ayant des organes (21) de coopération placés de part et d'autre du joint (6), caractérisé en ce que les organes de coopération (21) sont disposés radialement autour d'un centre de rotation (23) placé le long de l'axe central (5) du joint (6) afin qu'ils coopèrent avec une partie de connexion (17), adaptée à cet effet et présentant à son tour des organes (18) de serrage d'un autre objet allongé, ou avec une monture (40), Si bien que l'organe de retenue (1) peut prendre une position ouverte de réception et une position fermée de fixation, et l'organe de retenue (1) peut aussi prendre une position intermédiaire d'ajustement dans laquelle les organes de coopération (21), par manipulation du dispositif de blocage (9), ont une disposition telle que, par un effet de levier autour du joint (6), ils sont mis progressivement en coopération avec la partie de connexion (17) ou la monture (40), si bien que, dans la position d'ajustement, l'organe de retenue (1) peut tourner par rapport à la monture (40) ou la partie de connexion (17) peut tourner par rapport à l'organe de retenue (1) autour du centre de rotation (23).

2. Ensemble selon la revendication 1, caractérisé en ce que le serrage de l'objet allongé et la rotation relative sont commandés simultanément par le dispositif de blocage (9).

3. Ensemble selon la revendication 1 ou 2, caractérisé en ce que l'organe de retenue (1) ne comporte qu'un dispositif de blocage (9).

4. Ensemble selon l'une quelconque des revendications précédentes, caractérisé en ce que, lorsque l'organe de retenue (1) entoure totalement ou partiellement l'objet allongé, le dispositif de blocage (9) est placé du côté opposé de l'objet allongé, par rapport aux organes de coopération (21).

5. Ensemble selon la revendication 1, dans lequel les organes de coopération (21) sont des épaulements (24) de serrage ayant des surfaces de coopération (25) dirigées radialement vers l'extérieur par rapport au centre de rotation (23), caractérisé en ce que les surfaces de coopération (25) sont formées par un segment pratiquement conique de surface.

6. Ensemble selon la revendication 1, caractérisé en ce que le dispositif de blocage (9) est formé par un raccord à vis.
